# EUROPEAN PATENT SPECIFICATION

(11) **EP 3 124 355 B1**
(45) Date of publication and mention of the grant of the patent: **05.12.2018**
(21) Application number: 16182025.3
(22) Date of filing: 29.07.2016
(51) Int. Cl.: B62D 1/185, B62D 1/19

(54) **STEERING COLUMN DEVICE**
LENKSÄULENEINRICHTUNG
DISPOSITIF DE COLONNE DE DIRECTION

(30) Priority: 31.07.2015 JP 2015151489
(43) Date of publication of application: 01.02.2017
(73) Proprietor: Fujikiko Co., Ltd., Kosai-shi, Shizuoka 431-0431 (JP)
(72) Inventor: Uesaka, Yota, Shizuoka, 431-0431 (JP)
(74) Representative: Grünecker Patent- und Rechtsanwälte PartG mbB

(56) References cited:
- JP-A- S61 135 861
- JP-A- 2008 230 555
- JP-U- H0 264 470
- US-A- 4 627 306
- US-A1- 2007 137 377

## Description

### Technical Field

The present application relates to a steering column device which enables a telescopic operation and also allows an inner jacket to be contracted together with a steering shaft by an impact load at a secondary collision of an impact accident, thereby absorbing the impact energy.

### Background Art

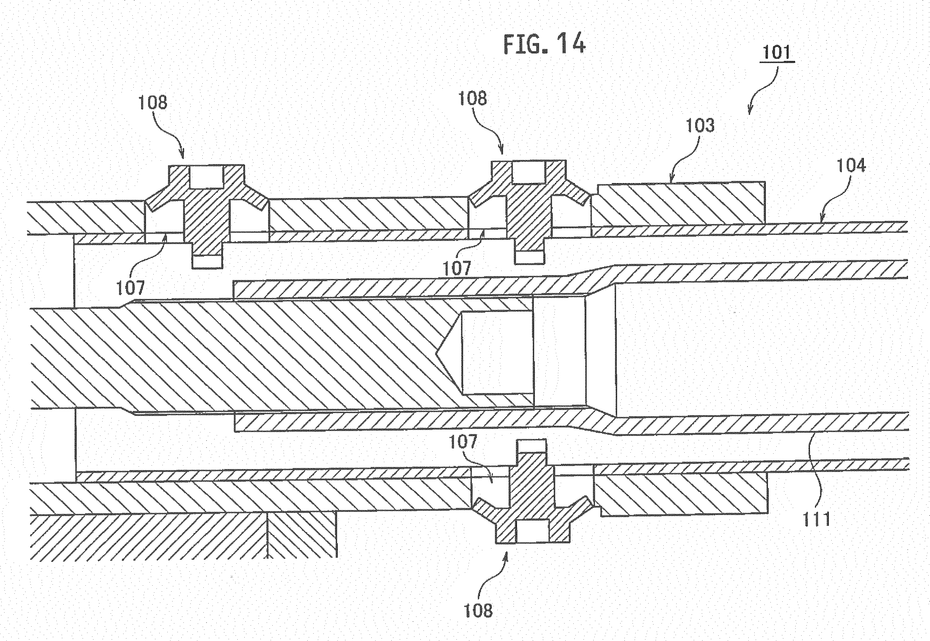

Patent Document 1 (Japanese Patent Application Publication No. 2012-250651) illustrates a steering column device as a conventional type of the above steering column device. As illustrated in Fig. 14, this steering column device 101 includes an inner jacket 104 which supports a steering wheel (not illustrated) through a steering shaft III, and an outer jacket 103 in which this inner jacket 104 is inserted slidably in the axial direction. Also, penetrating holes 107 are formed which penetrate through the outer jacket 103 and the inner jacket 104 at portions of the outer jacket 103 and the inner jacket 104 overlapping each other, and shear pins 108 are provided which engage with these penetrating holes 107. Also, upon application of a load of a set value or greater to the inner jacket 104 in the axial direction, the shear pins 108 fracture, thereby allowing movement of the inner jacket 104 in the axial direction. As the inner jacket 104 moves in the axial direction, the impact energy is absorbed. Document JPH0264470U U, which is seen as the closest prior art, shows
a steering column device with the features of the preamble of claim 1.

### Summary

Meanwhile, the steering column device 101, disclosed in above-mentioned Patent Document 1 (Japanese Patent Application Publication No. 2012-250651), has a problem in that when the steering wheel, which has been moved to the front, is pulled back toward the rear of the vehicle after the impact energy is absorbed, the inner jacket 104 is detached from the outer jacket 103, thus making steering operation impossible.

In consideration of the above-mentioned situation, an object of the present
application is to provide a steering column device capable of preventing detachment of an inner jacket from an outer jacket and allowing steering operation when the inner jacket is pulled back after impact energy is absorbed.

A steering column device according to an aspect of the present application includes: an outer jacket having a cylindrical shape and arranged along a vehicle longitudinal direction an inner jacket having a cylindrical shape and inserted in the outer jacket in such a way as to be movable in an axial direction; a telescopic rail part provided to the outer jacket and including a pair of parallel walls facing each other along an axial direction of the outer jacket; a contraction rail part provided to the outer jacket and including a pair of walls facing each other along the axial direction of the outer jacket, the contraction rail part extending forward farther than the telescopic rail part; a rear-end restricting wall standing at a rear end portion of at least one of the telescopic rail part and the contraction rail part in a direction crossing an axis; a front-end restricting wall standing at a front end of the telescopic rail part in a direction crossing the axis; a restricting protrusion protruding from an outer circumferential face of the inner jacket in such a way as to be movable inside the telescopic rail part and the contraction rail part in the axial direction and engageable with the rear-end restricting wall; and a stopper protruding from the restricting protrusion through a shear part in such a way as to be capable of contacting the front-end restricting wall, the shear part being more fragile than other parts of the restricting protrusion, wherein the steering column device has a telescopic-position restricting structure configured such that in adjustment of a telescopic position, the restricting protrusion moves inside the telescopic rail part between the front-end restricting wall and the rear-end restricting wall, and upon application of a load of a set value or greater to the inner jacket in the axial direction, the restricting protrusion moves inside the telescopic rail part forward in the axial direction together with the inner jacket and the stopper comes into contact with the front-end restricting wall, fractures from the shear part, and is detached from the restricting protrusion, thereby allowing the restricting protrusion to move inside the contraction rail part forward in the axial direction.

In the above steering column device, the restricting protrusion engages with the rear-end restricting wall when the inner jacket is pulled back after the stopper is detached and the restricting protrusion moves inside the contraction rail part upon application of a load of the set value or greater to the inner jacket in the axial direction. This structure prevents detachment of the inner jacket from the outer jacket and also prevents rotation of the inner jacket in the circumferential direction relative to the outer jacket. Hence, steering operation can be performed even after the absorption of the impact.

An interval between the walls, facing each other, of the contraction rail part may be set to be smaller than a width of the restricting protrusion.

With the interval between the walls, facing each other, of the contraction rail part set to be smaller than the width of the restricting protrusion, the impact energy can be absorbed by the friction generated when the restricting protrusion moves inside the contraction rail part. This eliminates the need of providing an additional structure to absorb the impact energy. Hence, the number of components in the device as a whole can be reduced.

The telescopic rail part may include slot walls of a telescopic slot penetrating through a cylinder wall of the outer jacket, and the contraction rail part may include sidewalls of a rail groove formed in an inner face of the outer jacket.

Since the contraction rail part includes the sidewalls of the rail groove formed in the inner face of the outer jacket, the contraction rail part is not exposed to the outside. This eliminates the possibility that the detached stopper enters the contraction rail part and interrupts the movement of the restricting protrusion. Hence, the impact energy can be reliably absorbed.

The outer jacket may be dividable at a sectional plane passing through the telescopic rail part.

In a case of inserting the inner jacket into the outer jacket and then mounting the restricting protrusion, it is necessary to mount the restricting protrusion while positioning the inner jacket in the axial direction and the circumferential direction inside the outer jacket. This makes the assembling work complicated. On the other hand, if the outer jacket is constructed to be dividable at a sectional plane passing through the telescopic rail part, the inner jacket can be mounted to the outer jacket with the restricting protrusion mounted to the inner jacket. This can improve the assemblability of the device as a whole.

### Brief Description of Drawings

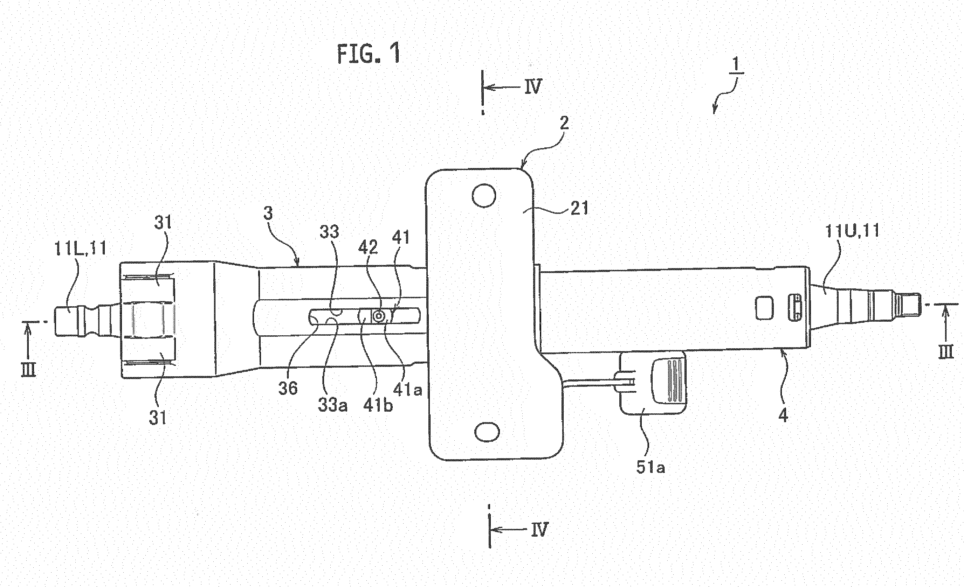

Fig. 1 is a plan view illustrating a first embodiment of the present application.

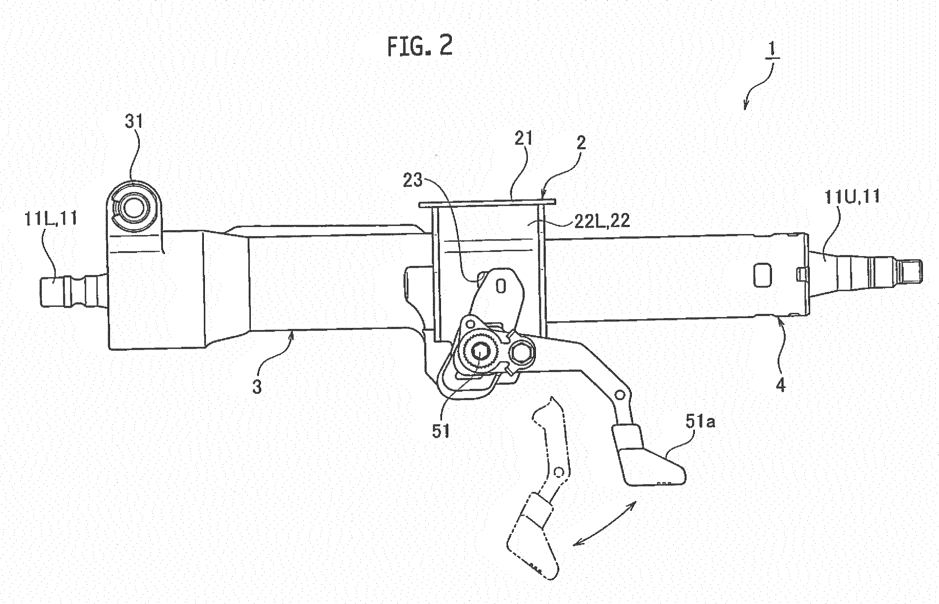

Fig. 2 is a side view illustrating the first embodiment of the present application.

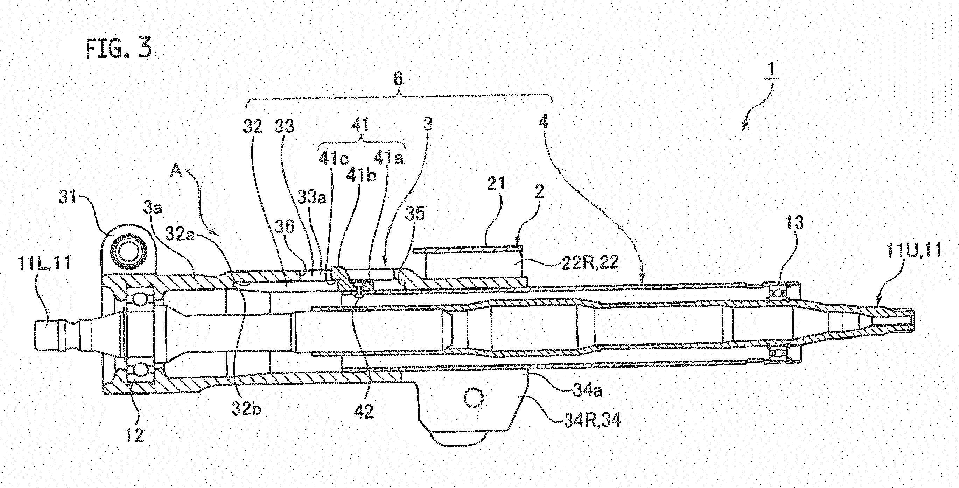

Fig. 3 is a sectional view along a line III-III of Fig. 1.
Fig. 4 is a sectional view along a line IV-IV of Fig. 1.

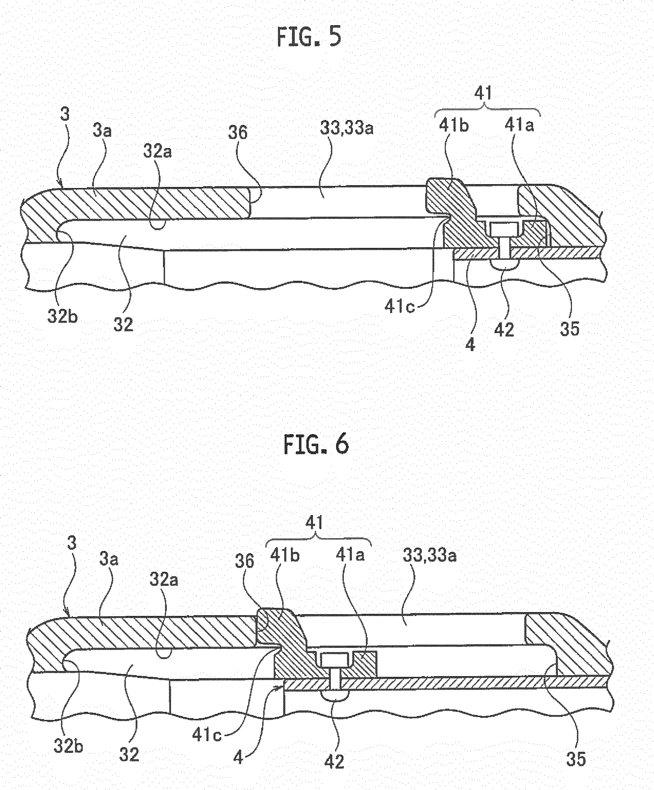

Fig. 5 is an enlarged view of a section A in Fig. 3 illustrating a telescopically extended state under a normal condition.
Fig. 6 is an enlarged view of the section A in Fig. 3 illustrating a telescopically contracted state under the normal condition.

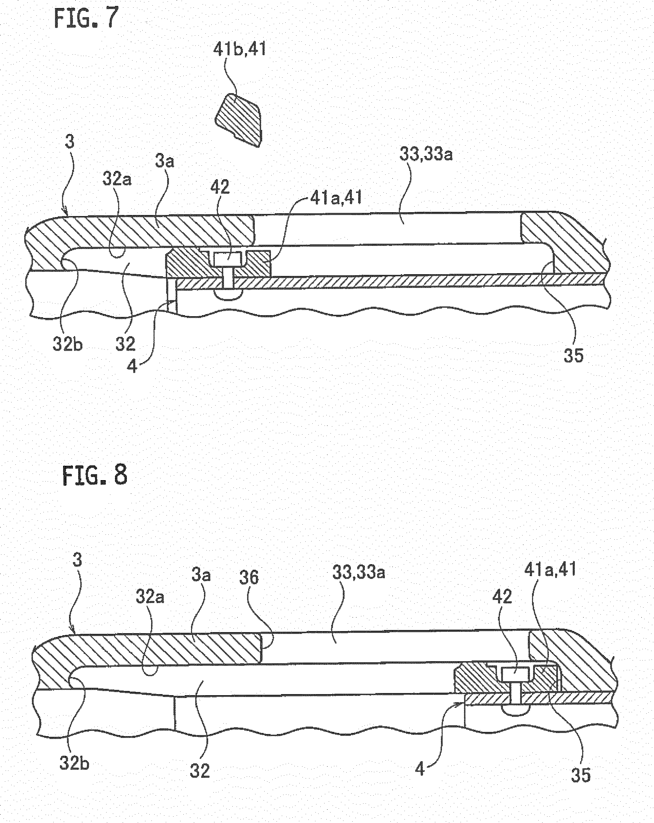

Fig. 7 is an enlarged view of the section A in Fig. 3 illustrating a state during impact absorption.
Fig. 8 is an enlarged view of the section A in Fig. 3 illustrating a state where an inner jacket is pulled back after the impact absorption.
Fig. 9 is a plan view illustrating a second embodiment of the present application.
Fig. 10 is a sectional view along a line X-X of Fig. 9.
Fig. 11 is a sectional view along a line XI-XI of Fig. 9.
Fig. 12 is a plan view illustrating a third embodiment of the present application.
Fig. 13 is a sectional view along a line XIII-XIII of Fig. 12.
Fig. 14 is a sectional view of a steering column device illustrating a conventional example.

### Description of Embodiments

Embodiments of the present application will be described below with reference to drawings. Note that steering column devices in a first embodiment to a third embodiment are of a manual type.

### [First Embodiment]

The first embodiment of the present application will be described below with reference to drawings. A steering column device 1 in this embodiment includes: an attachment bracket 2 for fixing the steering column device 1 to a vehicle body; an outer jacket 3 which is supported to the attachment bracket 2 swingably (capable of adjusting its tilt position) in a vehicle vertical direction; an inner jacket 4 which is supported to the outer jacket 3; a lock unit 5 configured to fasten the inner jacket 4 and the outer jacket 3 at a desired position to the attachment bracket 2 into a single body; and a telescopic-position restricting structure 6 configured to define the adjustment range for the position of the inner jacket 4 relative to the outer jacket 3 in a vehicle longitudinal direction (telescopic direction).

The attachment bracket 2 includes a flat plate-shaped main body part 21 which is fixed to a ceiling plane (not illustrated) of the vehicle body, and a pair of hanging parts 22 which hang from a lower face of the main body part 21, and is formed in a substantially U-shape facing downward. Both of the hanging parts 22 are provided with a tilt slot 23 opened to define the tilt-position adjustment range along the vehicle vertical direction (tilting direction). Each tilt slot 23 is formed of an arcuate elongated hole centered on a pivot part 31 to be described below.

The outer jacket 3 has a cylindrical shape and is arranged between the pair of hanging parts 22 along the vehicle longitudinal direction. The outer jacket 3 includes the pivot part 31 at its upper marginal portion on the vehicle-front-end side. The pivot part 31 is rotatably supported on the ceiling plane of the vehicle body, so that the vehicle-rear-end side of the outer jacket 3 swings in the vehicle vertical direction. Also, a contraction rail part 32 and a telescopic rail part 33 are formed at an upper portion of a middle section of the outer jacket 3. Moreover, a pair of clamp parts 34 are provided to stand on a rear end portion of the outer jacket 3.

The contraction rail part 32 provides a rail groove 32a formed in an inner face of the upper portion of the outer jacket 3 along its axial direction, and includes a pair of sidewalls being facing in parallel with each other. Namely, a middle portion of a cylinder wall 3a of the outer jacket 3 is formed swollen toward the upper side (outward in a radial direction). The rail groove 32a is formed at an inner face (lower face) of a swollen portion of the cylinder wall 3a of the outer jacket 3.

The rail groove 32a is formed of a recess groove extending in the axial direction and recessed outward in a radial direction in an inner face of an upper portion of the cylinder wall 3a of the outer jacket 3. A rear end portion of the rail groove 32a forms a rear-end restricting wall 35 standing in a direction perpendicular to the axis. That is, the rear-end restricting wall 35 is set at the rear end of the contraction rail part 32. Also, the rail groove 32a defines the position of the inner jacket 4 in a fully contracted state after impact absorption, and a limit position (detachment prevention) up to which the inner jacket 4 is allowed to be pulled back toward the rear after the impact absorption. Note that in this embodiment, since the rear-end restricting wall 35 is set as the rail groove 32a, the limit position and a retreat position in the telescopic direction coincide with each other.

The telescopic rail part 33 provides a telescopic slot 33a formed of an elongated hole penetrating through a portion of the cylinder wall 3a which forms a ceiling portion above the rail groove 32a, and includes a pair of sidewalls facing in parallel with each other. That is, the telescopic slot 33a is opened in such a way as to overlap the radially outer side of the rail groove 32a.

A front end portion of the telescopic slot 33a forms a front-end restricting wall 36 standing in the direction perpendicular to the axis. That is, the front-end restricting wall 36 is set at the front end of the telescopic rail part 33. Moreover, a telescopic-position adjustment range is set between the front-end restricting wall 36 and the rear-end restricting wall 35.

The pair of clamp parts 34 are located on the rear-end side of the outer jacket 3 and stand on portions thereof facing the hanging parts 22 along the vehicle vertical direction. Note that both clamp parts 34 are separated from each other, and a slit 34a is formed therebetween along the axial direction. Also, an operating shaft 51 penetrates through both clamp parts 34 rotatably about its axis.

The inner jacket 4 has a cylindrical shape and is inserted in the cylinder of the outer jacket 3 movably in the axial direction. Note that a steering shaft 11 is rotatably supported inside the cylinders of the inner jacket 4 and the outer jacket 3. The steering shaft 11 includes a lower shaft 11L rotatably supported in the outer jacket 3 and an upper shaft 11U rotatably supported in the inner jacket 4. The upper shaft 11U and the lower shaft 11L are spline-connected to each other. Thus, the steering shaft 11 is configured so that the upper shaft 11U and the lower shaft 11L can rotate together about their axes and the upper shaft 11U can move relative to the lower shaft 11L in the axial direction. Also, a restricting protrusion 41 is disposed on an upper portion of an outer circumferential face of a front-end section of the inner jacket 4.

The restricting protrusion 41 includes a base 41a and a stopper 41b.

The base 41a is fixed to the inner jacket 4 through a rivet 42. The dimensions of the base 41a are set so that the base 41a can freely move inside the contraction rail part 32 in the axial direction without chatter.

The stopper 41b is formed on an upper face of the front-end side of the base 41a in such a way as to protrude forward and upward farther than the base 41a. The stopper 41b protrudes from the restricting protrusion 41 through a shear part 41c, which is more fragile than the other parts restricting protrusion 41, in such a way as to be capable of contacting the front-end restricting wall 36.

The shear part 41c is constricted to be narrower than the other parts and designed to fracture upon application of a load of a set value or greater to the stopper 41b. A front-end face of the stopper 41b comes into contact with the front-end restricting wall 36. The dimensions of the stopper 41b are set so that the stopper 41b can freely move inside the telescopic rail part 33 in the axial direction without chatter.

The lock unit 5 includes an operating lever 51a, the operating shaft 51, a stationary cam 52a, a rotational cam 52b, and a stationary cam 53.

The operating shaft 51 has a shaft shape. The operating shaft 51 penetrates through the tilt slots 23 of both hanging parts 22 and both clamp parts 34 of the outer jacket 3 in a vehicle width direction, and is supported rotatably about its axis. Also, one end portion of the operating shaft 51 is fixed by a nut 55 through the stationary cam 53, which engages with an outer face of the right-side hanging part 22R, a thrust bearing 54, and a washer 56. Also, a cam unit 5a and the operating lever 51a are disposed on the other end portion of the operating shaft 51 between a head part provided integrally with the other end portion and an outer face of the left-side hanging part 22L. Moreover, the cam unit 5a on the operating shaft 51, located between the operating lever 51a and the left-side hanging part 22L, includes the stationary cam 52a and the rotational cam 52b.

The stationary cam 52a has a wide circular ring shape so that the operating shaft 51 can penetrate through its center. The stationary cam 52a is arranged so that its stationary cam face faces the operating lever 51a side. Also, with the opposite side from the stationary cam face fitted in the tilt slot 23, the stationary cam 52a is arranged not to rotate about the operating shaft 51 but to be movable in the tilt slot 23 vertically. On the stationary cam face, crest parts and trough parts are formed along the circumferential direction alternately.

The rotational cam 52b has a wide circular ring shape so that the operating shaft 51 can penetrate through its center. The rotational cam 52b is arranged so that its rotational cam face faces the stationary cam face. Also, the rotational cam 52b is joined to the operating lever 51a in such a way as to be capable of rotating together with the operating lever 51a. Additionally, the rotational cam 52b is mounted to the operating shaft 51 in such a way as to be capable of rotating about the operating shaft 51, which penetrates therethrough, together with the operating shaft 51. On the rotational cam surface, crest parts and trough parts are formed along the circumferential direction alternately.

The telescopic-position restricting structure 6 is a structure configured to define the range of movement of the inner jacket 4 within a range within which the telescopic position is adjusted under a normal condition and to, upon application of a load of the set value or greater to the inner jacket 4, switch the range of movement of the inner jacket 4 to a range for absorbing the impact energy. The outer jacket 3, the inner jacket 4, the telescopic rail part 33, the contraction rail part 32, and the restricting protrusion 41 constitute the telescopic-position restricting structure 6.

When the inner jacket 4 is positioned at the foremost position (the steering column device 1 is fully contracted) for the adjustment of the telescopic position under the normal condition, the stopper 41b of the restricting protrusion 41 is in contact with the front-end restricting wall 36 of the telescopic rail part 33. Also, when the inner jacket 4 is positioned at the rearmost position (the steering column device 1 is fully extended) for the adjustment of the telescopic position under the normal condition, the base 41a of the restricting protrusion 41 is in contact with the rear-end restricting wall 35 of the contraction rail part 32. In the adjustment of the telescopic position, the restricting protrusion 41 moves inside the telescopic rail part 33 between the front-end restricting wall 36 and the rear-end restricting wall 35.

Upon application of a load of the set value or greater to the inner jacket 4 in the axial direction, the restricting protrusion 41 moves inside the telescopic rail part 33 forward in the axial direction together with the inner jacket 4 and the stopper 41b collides with the front-end restricting wall 36, fractures from the shear part 41c, and is detached from the restricting protrusion 41. Consequently, the restricting protrusion 41 further moves inside the contraction rail part 32 forward in the axial direction until coming into contact with a front end portion 32b of the contraction rail part 32. If the driver then pulls back the inner jacket 4 toward the rear after receiving the load of the set value or greater, the base 41a of the restricting protrusion 41 comes into contact with the rear-end restricting wall 35 of the contraction rail part 32, thereby preventing the inner jacket 4 from being pulled out.

Next, the procedure of assembling the steering column device 1 in this embodiment will be described.

First, the lower shaft 11L is rotatably supported to the outer jacket 3 through an outer bearing 12.

Then, the outer jacket 3 is arranged between the hanging parts 22 of the attachment bracket 2, and the outer jacket 3 is suspended onto the attachment bracket 2.

Then, the upper shaft 11U is rotatably supported to the inner jacket 4 through an inner bearing 13.

Then, a front-end portion of the inner jacket 4 is inserted into the outer jacket 3 from its rear-end side, and the upper shaft 11U is spline-connected to the lower shaft 11L.

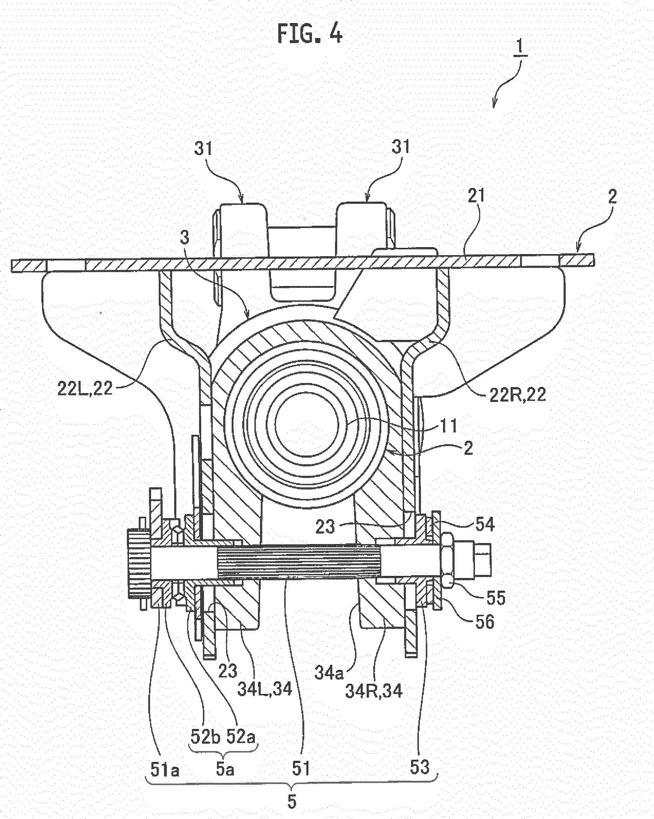

Then, the operating shaft 51 is mounted to the attachment bracket 2 and the outer jacket 3. The operating shaft 51 penetrates through the operating lever 51a, the rotational cam 52b, the stationary cam 52a, the tilt slot 23 of the left-side hanging part 22L, the left-side clamp part 34L, the right-side clamp part 34R, and the tilt slot 23 of the right-side hanging part 22R in this order from the left side as viewed in Fig. 4. The operating shaft 51 further penetrates outward from the right-side hanging part 22R through the stationary cam 53, the thrust bearing 54, and the washer 56. Thereafter, the nut 55 is screwed onto a tip portion of the operating shaft 51. As a result, the operating shaft 51 is mounted.

Then, the front-end portion of the inner jacket 4 is held within the telescopic slot 33a, and the restricting protrusion 41 is mounted to the front-end portion of the inner jacket 4 from outside the outer jacket 3 through telescopic slot 33a by using the rivet 42.

Next, the procedure of operating the steering column device 1 in this embodiment will be described.

In order to fix the inner jacket 4 at a desired position, first, the inner jacket 4 is moved in the tilting direction (vehicle vertical direction) and the telescopic direction (vehicle longitudinal direction) to the desired position with the inner jacket 4 and the outer jacket 3 unfastened from each other. Then, the operating lever 51a is operated to swing upward. By operating the operating lever 51a to swing it upward, the operating shaft 51 rotates about its axis in the fastening direction.

As the rotational cam 52b, integrated with the operating lever 51a, rotates in the fastening direction together with the operating shaft 51, the crest parts of the stationary cam 52a and the crest parts of the rotational cam 52b coincide with each other to increase the axial dimension. Consequently, the operating shaft 51 is pulled toward the cam unit 5a, thereby bringing the hanging parts 22 and the clamp parts 34 into pressure contact with each other and holding the outer jacket 3 in a given tilt position. Moreover, the interval between the pair of clamp parts 34 is reduced, thereby reducing the diameter of the outer jacket 3 and bringing the outer jacket 3 into pressure contact with the inner jacket 4. Consequently, the inner jacket 4, positioned at the desired tilt position and telescopic position, is fastened to the outer jacket 3.

Meanwhile, in order to adjust the position of the inner jacket 4, the inner jacket 4 and the outer jacket 3 are unfastened from each other. For this purpose, first, the operating lever 51a is operated to swing downward (unfastening direction). By operating the operating lever 51a to swing it downward, the operating shaft 51 rotates about its axis in the unfastening direction.

As the rotational cam 52b, integrated with the operating lever 51a, rotates together with the operating shaft 51 in the unfastening direction, the crest parts of the stationary cam 52a and the trough parts of the rotational cam 52b coincide with each other to reduce the axial dimension of the cam unit 5a. Consequently, the operating shaft 51 is loosened to cancel the pressure contact between the hanging parts 22 and the clamp parts 34, thereby allowing the outer jacket 3 to move relative to the attachment bracket 2 in the tilt direction (vehicle vertical direction). Also, the interval between the pair of clamp parts 34 is increased, thereby increasing the diameter of the outer jacket 3 and allowing the inner jacket 4 to move in the telescopic direction (vehicle longitudinal direction).

Upon application of a load of the set value or greater to the inner jacket 4 forward in the axial direction after the fastening operation of the operating lever 51a to fasten the inner jacket 4 to the outer jacket 3, the restricting protrusion 41 moves inside the telescopic rail part 33 forward in the axial direction together with the inner jacket 4. Here, the impact energy is absorbed as the inner jacket 4 moves forward in the axial direction while resisting the force of the pressure contact from the outer jacket 3. Further, as the inner jacket 4 continues to move forward in the axial direction and the stopper 41b collides with the front-end restricting wall 36, the stopper 41b fractures at the shear part 41c and is detached from the restricting protrusion 41. With the stopper 41b detached from the restricting protrusion 41, the restricting protrusion 41 can enter the portion of the contraction rail part 32 forward of the front-end restricting wall 36. The remaining impact energy is absorbed as the inner jacket 4 continues to move forward in the axial direction while resisting the force of the pressure contact from the outer jacket 3.

As described above, according to the above embodiment, in the adjustment of the telescopic position under the normal condition, the lock unit 5 is unlocked, the restricting protrusion 41 is moved inside the telescopic rail part 33 between the front-end restricting wall 36 and the rear-end restricting wall 35, and the inner jacket 4 can be fastened at a desired telescopic position to the outer jacket 3.

Also, when the inner jacket 4 is pulled back together with the steering wheel (not illustrated) after the restricting protrusion 41 moves inside the contraction rail part 32 with the stopper 41b detached upon application of a load of the set value or greater to the inner jacket 4 in the axial direction, the restricting protrusion 41 engages with the rear-end restricting wall 35, thereby making it impossible to pull out the inner jacket 4. This structure ensures that steering operation can be performed after the absorption of the impact.

Since the contraction rail part 32 is formed by the sidewalls of the rail groove formed in the inner face of the outer jacket 3, the contraction rail part 32 is not exposed to the outside. This eliminates the possibility that the detached stopper enters the contraction rail part 32 and interrupts the movement of the restricting protrusion 41. Hence, the impact energy can be reliably absorbed.

Meanwhile, the width of the portion of the contraction rail part 32 located forward of the front-end restricting wall 36 may be set to be slightly smaller than the width of the base 41a so that the restricting protrusion 41 widens the portion of the contraction rail part 32 forward of the front-end restricting wall 36 when moving through that portion of the contraction rail part 32. Such a configuration can absorb the impact energy by means of the friction generated when the restricting protrusion 41 moves through that portion of the contraction rail part 32 while widening it. Also, since the configuration can absorb the impact energy by means of a force other than the force of the pressure contact from the clamp parts 34 and requires no additional structure to be provided to absorb the impact energy, the number of components in the device as a whole can be reduced.

### [Second Embodiment]

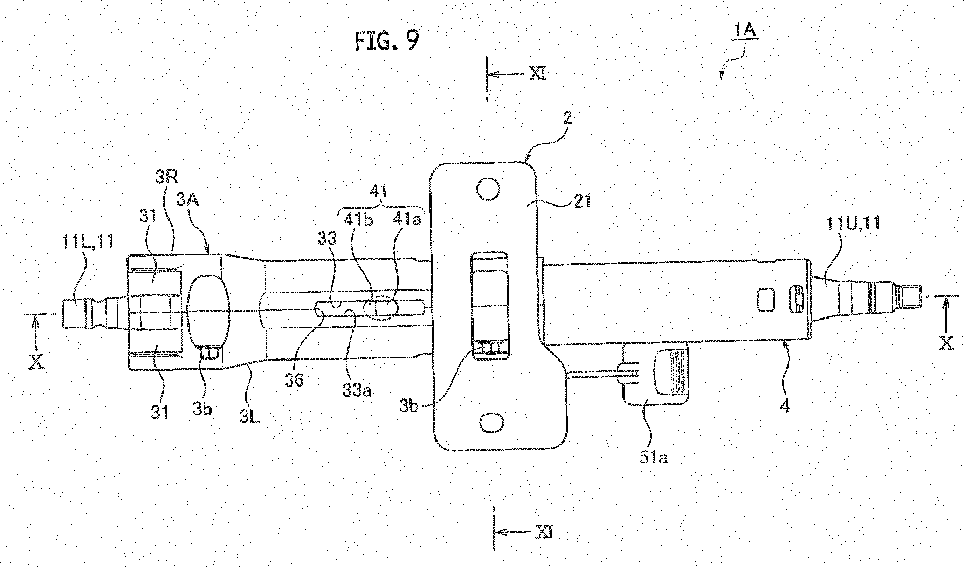

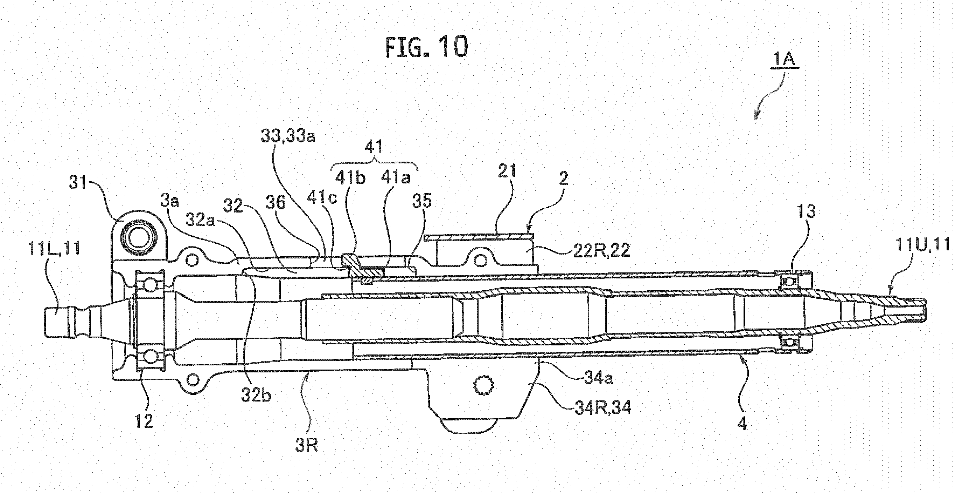

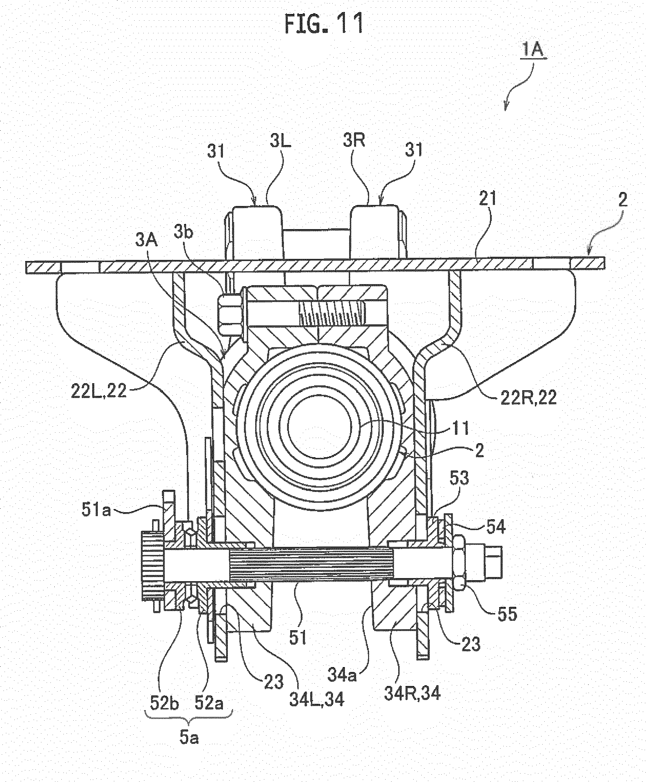

Next, a second embodiment will be described. Components similar to those in the above-described first embodiment will be denoted by the same reference signs, and detailed description thereof will be omitted. A characteristic difference of this embodiment from the above-described first embodiment is the configuration of an outer jacket 3A, as illustrated in Fig. 9 to Fig. 11.

The outer jacket 3 in the above-described first embodiment is formed of a single cylindrical component. On the other hand, the outer jacket 3A in this embodiment is divided into two components of a right-side outer jacket 3R and a left-side outer jacket 3L at a sectional plane passing through the telescopic rail part 33 and the contraction rail part 32 in the axial direction. The right-side outer jacket 3R and the left-side outer jacket 3L are assembled together with their front-end sides and rear-end sides fastened to each other by bolts 3b.

Moreover, the width of the base 41a of the restricting protrusion 41 in the circumferential direction is set to be greater than the width of the telescopic slot 33a. Such a configuration makes the method of assembling a steering column device 1A different. In the assembling procedure in the first embodiment, the restricting protrusion 41 is fixed with a rivet to the inner jacket 4 that has been mounted to the outer jacket 3. However, in the assembling procedure in this embodiment, the restricting protrusion 41 is mounted to the inner jacket 4 and then the inner jacket 4 clamped by the outer jacket 3A.

In the case of the assembling procedure involving inserting the inner jacket 4 into the outer jacket 3 and then mounting the restricting protrusion 41 to the inner jacket 4, it is necessary to mount the restricting protrusion 41 while positioning the inner jacket 4 in the axial direction and the circumferential direction inside the outer jacket 3. This makes the assembling work complicated.

On the other hand, since the outer jacket 3A is constructed to be dividable at the sectional plane passing through the telescopic rail part 33, the inner jacket 4 can be mounted to the outer jacket 3A with the restricting protrusion 41 mounted to the inner jacket 4. This can improve the assemblability of the steering column device as a whole.

Also, since the width of the base 41a in the circumferential direction is set to be greater, the base 41a is clamped by the contraction rail parts 32 of the right-side outer jacket 3R and the left-side outer jacket 3L when mounted. This eliminates the possibility that the base 41a falls from the contraction rail parts 32.

### [Third Embodiment]

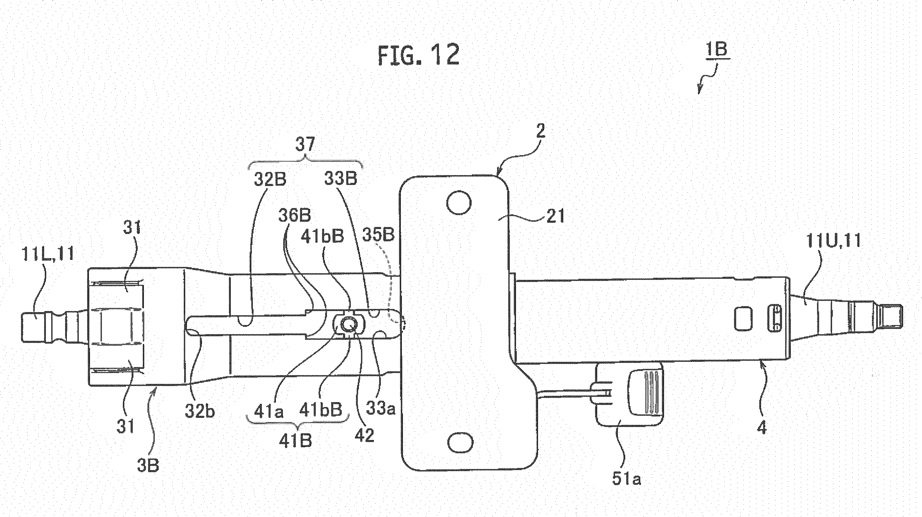

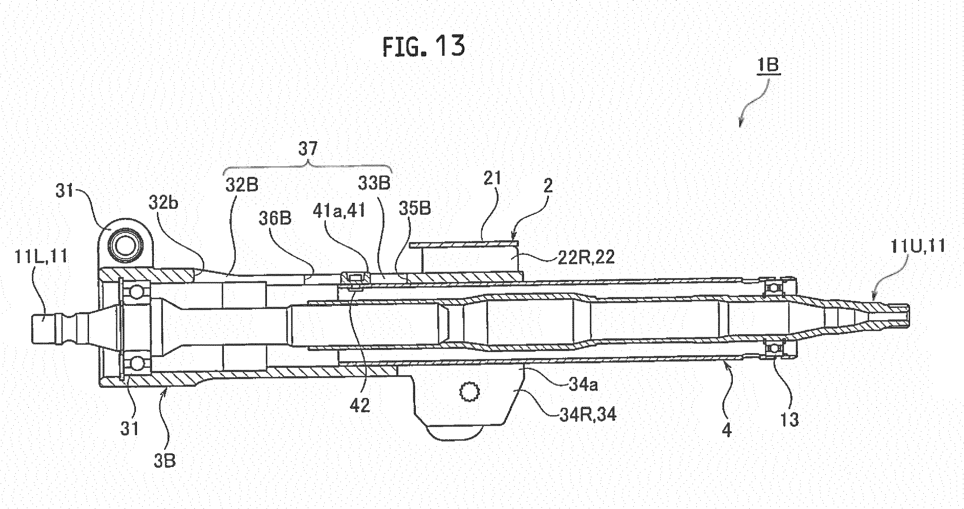

Next, a third embodiment will be described. Components similar to those in the above-described first embodiment will be denoted by the same reference signs, and detailed description thereof will be omitted. A characteristic difference of this embodiment from the above-described first embodiment is the shape of a restricting protrusion 41B, as illustrated in Fig. 12 and Fig. 13.

The stopper 41b of the restricting protrusion 41 in the above-described first embodiment protrudes from the base 41a outward in the radial direction. On the other hand, a steering column device 1B in this embodiment includes stoppers 41bB protruding from the base 41a in the circumferential direction.

Moreover, instead of the rail groove 32a and the telescopic slot 33a, a rail slot 37 is opened at an upper portion of a middle section of an outer jacket 3B as a component for the configuration of the restricting protrusion 41B. The rail slot 37 has different slot widths at its front side and rear side; the front side with the smaller slot width forms a contraction rail part 32B whereas the rear side with the greater slot width forms a telescopic rail part 33B. Moreover, a rear-end portion of the rail slot 37 forms a rear-end restricting wall 35B whereas each step located at the middle portion of the rail slot 37 at which the slot width decreases forms a front-end restricting wall 36B. Note that the slot width of the telescopic rail part 33B is set at such a size that the stoppers 41bB can freely move inside the telescopic rail part 33B in the axial direction without chatter. Moreover, the slot width of the contraction rail part 32B is set at such a size that the base 41a can freely move inside the contraction rail part 32B in the axial direction without chatter.

In the case of the configuration of the restricting protrusion 41 in the first embodiment, the telescopic rail part 33 is arranged outward of the contraction rail part 32 in the radial direction. This requires a process of pressing the corresponding portion of the outer jacket 3 outward in the radial direction. However, the configuration of the restricting protrusion 41B in this embodiment only requires working for providing the rail slot 37, which changes in width at a given point in the axial direction. This can simplify the manufacturing process of the steering column device as a whole.

## Claims

1. A steering column device (1, 1A, 1B) comprising:
an attachment bracket (2) to be fixed to a vehicle body;
an outer jacket (3, 3A, 3B) supported to the attachment bracket (2) in such a way as to be swingable in a vehicle vertical direction and arranged along a vehicle longitudinal direction;
an inner jacket (4) inserted in the outer jacket (3, 3A, 3B) in such a way as to be movable in an axial direction;
a lock unit (5) configured to fasten the outer jacket (3, 3A, 3B) and the inner jacket (4) together at a desired position;
a telescopic rail part (33, 33B) provided to the outer jacket (3, 3A, 3B) and including a pair of parallel walls facing each other along an axial direction of the outer jacket (3, 3A, 3B);
a contraction rail part (32, 32B) provided to the outer jacket (3, 3A, 3B) and including a pair of walls facing each other along the axial direction of the outer jacket (3, 3A, 3B), the contraction rail part (32, 32B) extending forward farther than the telescopic rail part (33, 33B);
a rear-end restricting wall (35, 35B) standing at a rear end portion of at least one of the telescopic rail part (33, 33B) and the contraction rail part (32, 32B) in a direction perpendicular to an axis;
a front-end restricting wall (36, 36B) standing at a front end of the telescopic rail part (33, 33B) in a direction perpendicular to the axis; and
a restricting protrusion (41, 41B) protruding from an outer circumferential face of the inner jacket (4) in such a way as to be movable inside the telescopic rail part (33, 33B) and the contraction rail part (32, 32B) in the axial direction and engageable with the rear-end restricting wall (35, 35B), wherein
the restricting protrusion (41, 41B) includes a stopper (41b, 41bB) protruding from the restricting protrusion (41, 41B) through a shear part (41c) in such a way as to be capable of contacting the front-end restricting wall (36, 36B), the shear part (41c) being more fragile than other parts of the restricting protrusion (41, 41B), and
the steering column device (1, 1A, 1B) has a telescopic-position restricting structure (6) configured such that
in adjustment of a telescopic position, the restricting protrusion (41, 41B) moves inside the telescopic rail part (33, 33B) between the front-end restricting wall (36, 36B) and the rear-end restricting wall (35, 35B), and
upon application of a load of a set value or greater to the inner jacket (4) in the axial direction, the restricting protrusion (41, 41B) moves inside the telescopic rail part (33, 33B) forward in the axial direction together with the inner jacket (4) and the stopper (41b. 41bB) comes into contact with the front-end restricting wall (36, 36B), fractures from the shear part (41c), and is detached from the restricting protrusion (41, 41B), thereby allowing the restricting protrusion (41, 41B) to move inside the contraction rail part (32, 32B) forward in the axial direction,
**characterized in that**
an interval between the walls, facing each other, of the contraction rail part (32, 32B) is set to be smaller than a width of the restricting protrusion (41, 41B).

2. The steering column device (1, 1A, 1B) of claim 1, wherein
the telescopic rail part (33) includes slot walls of a telescopic slot (33a) penetrating through a cylinder wall (3a) of the outer jacket (3, 3A, 3B), and
the contraction rail part (32) includes sidewalls of a rail groove (32a) formed in an inner face of the outer jacket (3, 3A, 3B).

3. The steering column device (1, 1A, 1B) of claim 1 or 2, wherein
the outer jacket (3A) is dividable at a sectional plane passing through the telescopic rail part (33).

## Patentansprüche

1. Lenksäuleneinrichtung (1, 1A, 1B), umfassend:
einen an eine Fahrzeugkarosserie anzubringenden Befestigungsbügel (2);
einen Außenmantel (3, 3A, 3B), der von dem Befestigungsbügel (2) auf solch eine Weise gehalten wird, dass er in einer vertikalen Fahrzeugrichtung schwenkbar ist und entlang der Fahrzeuglängsrichtung angeordnet ist;
einen Innenmantel (4), der in dem Außenmantel (3, 3A, 3B) auf solch eine Weise eingefügt ist, dass er in einer axialen Richtung beweglich ist;
eine Sperreinheit (5), gestaltet, um den Außenmantel (3, 3A, 3B) und den Innenmantel (4) zusammen an einer gewünschten Stelle zu fixieren;
einen ausziehbaren (teleskopischen) Scheinenteil (33, 33B), bereitgestellt an dem Außenmantel (3, 3A, 3B) und ein Paar aus parallelen Wänden einschließend, die entlang einer axialen Richtung des Außenmantels (3, 3A, 3B) einander zugewandt sind;
einen Kontraktionsschienenteil (32, 32B) (contraction rail part), bereitgestellt an dem Außenmantel (3, 3A, 3B) und ein Paar aus parallelen Wänden einschließend, die entlang der axialen Richtung des Außenmantels (3, 3A, 3B) einander zugewandt sind, wobei der Kontraktionsschienenteil (32, 32B) sich weiter vorwärts erstreckt als der teleskopische Schienenteil (33, 33B);
eine Hinterende-Begrenzungswand (35, 35B), die sich an einem hinteren Endabschnitt des teleskopischen Schienenteils (33, 33B) und/oder des Kontraktionsschienenteils (32, 32B) in einer Richtung senkrecht zu einer Achse befindet;
eine Vorderende-Begrenzungswand (36, 36B), die sich an einem vorderen Endabschnitt des teleskopischen Schienenteils (33, 33B) in einer Richtung senkrecht zu der Achse befindet; und
einen Begrenzungsvorsprung (41, 41B), der auf solch eine Weise aus der Außenumfangsfläche des Innenmantels (4) herausragt, dass er im Inneren des teleskopischen Schienenteil (33, 33B) und des Kontraktionsschienenteils (32, 32B) in der axialen Richtung beweglich ist und in Eingriff mit der Hinterende-Begrenzungswand (35, 35B) gebracht werden kann, wobei
der Begrenzungsvorsprung (41, 41B) eine Sperre (41b, 41bB) (stopper) einschließt, die aus dem Begrenzungsvorsprung (41, 41B) vermittels eines Scherteils (41c) auf solch eine Weise herausragt, dass sie geeignet ist, in Kontakt mit der Vorderende-Begrenzungswand (36, 36B) zu kommen, wobei das Scherteil (41c) anfälliger als andere Teile des Begrenzungsvorsprungs (41,41B) ist, und
die Lenksäuleneinrichtung (1, 1A, 1B) eine teleskopische Positionsbegrenzungsstruktur (6) aufweist, dergestalt, dass:
sich der Begrenzungsvorsprung (41,41B) beim Einstellen einer teleskopischen Position ins Innere des teleskopischen Schienenteils (33, 33B) zwischen die Vorderende-Begrenzungswand (36,36B) und die Hinterende-Begrenzungswand (35, 35B) bewegt, und
sich der Begrenzungsvorsprung (41, 41B) beim Aufbringen einer Last eines Einstellwertes oder größer auf die Innenwand (4) in axialer Richtung zusammen mit dem Innenmantel (4) in das Innere des teleskopischen Schienenteils (33, 33B) nach vorne in axialer Richtung bewegt, wobei die Sperre (41b, 41bB) in Kontakt mit der Vorderende-Begrenzungswand (36, 36B) kommt, von dem Scherteil (41c) abbricht und sich von dem Begrenzungsvorsprung (41, 41B) ablöst, wodurch es dem Begrenzungsvorsprung (41, 41B) ermöglicht wird, sich in das Innere des Kontraktionsschienenteils (32, 32B) nach vorne in axialer Richtung zu bewegen,
**dadurch gekennzeichnet, dass**
der Abstand zwischen den Wänden, die einander zugewandt sind, des Kontraktionsschienenteils (32, 32B) so eingestellt wird, dass er kleiner als die Breite des Begrenzungsvorsprungs (41, 41B) ist.

2. Lenksäuleneinrichtung (1, 1A, 1B) nach Anspruch 1, wobei
das teleskopische Schienenteil (33) Schlitzwände eines teleskopischen Schlitzes(33a) einschließt, der eine Zylinderwand (3a) des Außenmantels (3, 3A, 3B) durchdringt; und der Kontraktionsschienenteil (32) Seitenwände einer Schienenrille (32a), ausgebildet in einer Innenfläche des Außenmantels (3, 3A, 3B), einschließt,

3. Lenksäuleneinrichtung (1, 1A, 1B) nach Anspruch 1 oder 2, wobei
der Außenmantel (3A) an einer Schnittebene, die durch das teleskopische Schiebenteil (33) verläuft, geteilt werden kann.

## Revendications

1. Dispositif de colonne de direction (1, 1A, 1B) comprenant :
un support de fixation (2) à fixer à une carrosserie de véhicule ;
une gaine extérieure (3, 3A, 3B) supportée sur le support de fixation (2) de manière à pouvoir basculer dans une direction verticale de véhicule et disposée le long d'une direction longitudinale de véhicule ;
une gaine intérieure (4) insérée dans la gaine extérieure (3, 3A, 3B) de manière à pouvoir se déplacer dans une direction axiale ;
une unité de verrouillage (5) configurée pour attacher ensemble la gaine extérieure (3, 3A, 3B) et la gaine intérieure (4) à une position souhaitée ;
une partie de rail télescopique (33, 33B) agencée sur la gaine extérieure (3, 3A, 3B) et comprenant une paire de parois parallèles se faisant face l'une l'autre le long d'une direction axiale de la gaine extérieure (3, 3A, 3B) ;
une partie de rail de contraction (32, 32B) agencée sur la gaine extérieure (3, 3A, 3B) et comprenant une paire de parois se faisant face l'une l'autre le long de la direction axiale de la gaine extérieure (3, 3A, 3B), la partie de rail de contraction (32, 32B) s'étendant vers l'avant plus loin que la partie de rail télescopique (33, 33B) ;
une paroi de restriction d'extrémité arrière (35, 35B) se trouvant au niveau d'une partie d'extrémité arrière d'au moins l'une parmi la partie de rail télescopique (33, 33B) et la partie de rail de contraction (32, 32B) dans une direction perpendiculaire à un axe ;
une paroi de restriction d'extrémité avant (36, 36B) se trouvant au niveau d'une extrémité avant de la partie de rail télescopique (33, 33B) dans une direction perpendiculaire à l'axe ; et
une saillie de restriction (41, 41B) faisant saillie depuis une face circonférentielle extérieure de la gaine intérieure (4) de manière à pouvoir se déplacer à l'intérieur de la partie de rail télescopique (33, 33B) et de la partie de rail de contraction (32, 32B) dans la direction axiale et pouvant être mise en prise avec la paroi de restriction d'extrémité arrière (35, 35B), dans lequel
la saillie de restriction (41, 41B) comprend un butoir (41b, 41bB) faisant saillie depuis la saillie de restriction (41, 41B) à travers une partie de cisaillement (41c) de manière à pouvoir entrer en contact avec la paroi de restriction d'extrémité avant (36, 36B), la partie de cisaillement (41c) étant plus fragile que d'autres parties de la saillie de restriction (41, 41B), et
le dispositif de colonne de direction (1, 1A, 1B) a une structure de restriction de position télescopique (6) configurée de telle sorte que
lors de l'ajustement d'une position télescopique, la saillie de restriction (41, 41B) se déplace à l'intérieur de la partie de rail télescopique (33, 33B) entre la paroi de restriction d'extrémité avant (36, 36B) et la paroi de restriction d'extrémité arrière (35, 35B), et
lors de l'application d'une charge d'une valeur établie ou supérieure sur la gaine intérieure (4) dans la direction axiale, la saillie de restriction (41, 41B) se déplace à l'intérieur de la partie de rail télescopique (33, 33B) vers l'avant dans la direction axiale ensemble avec la gaine intérieure (4) et le butoir (41b, 41bB) vient en contact avec la paroi de restriction d'extrémité avant (36, 36B), se brise depuis la partie de cisaillement (41c) et se détache de la saillie de restriction (41, 41B), permettant ainsi à la saillie de restriction (41, 41B) de se déplacer à l'intérieur de la partie de rail de contraction (32, 32B) vers l'avant dans la direction axiale,
**caractérisé en ce que**
un intervalle entre les parois, se faisant face l'une l'autre, de la partie de rail de contraction (32, 32B) est établi pour être inférieur à une largeur de la saillie de restriction (41, 41B).

2. Dispositif de colonne de direction (1, 1A, 1B) selon la revendication 1, dans lequel la partie de rail télescopique (33) comprend des parois de fente d'une fente télescopique (33a) traversant une paroi de cylindre (3a) de la gaine extérieure (3, 3A, 3B), et
la partie de rail de contraction (32) comprend des parois latérales d'une rainure de rail (32a) formée dans une face intérieure de l'enveloppe extérieure (3, 3A, 3B).

3. Dispositif de colonne de direction (1, 1A, 1B) selon la revendication 1 ou 2, dans lequel
l'enveloppe extérieure (3A) peut être divisée au niveau un plan de coupe traversant la partie de rail télescopique (33).
